# EUROPÄISCHE PATENTSCHRIFT

(11) **EP 2 140 254 B1**
(45) Veröffentlichungstag und Bekanntmachung des Hinweises auf die Patenterteilung: **18.02.2015**
(21) Anmeldenummer: 08736350.3
(22) Anmeldetag: 18.04.2008
(51) Int. Cl.: G01N 23/04, G01B 21/04

(54) **VERFAHREN ZUM DIMENSIONELLEN MESSEN MIT KOORDINATENMESSGERÄTEN**
METHOD FOR DIMENSIONALLY MEASURING BY MEANS OF COORDINATE MEASURING INSTRUMENTS
PROCÉDÉ DE MESURE DIMENSIONNELLE AU MOYEN D'APPAREILS DE MESURE DE COORDONNÉES

(30) Priorität: 20.04.2007 DE 102007019148; 07.05.2007 DE 102007021809
(43) Veröffentlichungstag der Anmeldung: 06.01.2010
(73) Patentinhaber: Werth Messtechnik GmbH, 35394 Giessen (DE)
(72) Erfinder: CHRISTOPH, Ralf, 35394 Giessen (DE); RAUH, Wolfgang, 35094 Lahntal (DE); HAMMER, Michael, 35447 Reiskirchen (DE)
(74) Vertreter: Stoffregen, Hans-Herbert
(86) Internationale Anmeldenummer: PCT/EP2008/054699
(87) Internationale Veröffentlichungsnummer: WO 2008/128978

(56) Entgegenhaltungen:
- WO-A-2005/119174
- GB-A- 2 194 367
- US-A1- 2004 172 215

## Beschreibung

Die Erfindung bezieht sich auf ein Verfahren zum dimensionellen Messen mit einem Koordinatenmessgerät, in dem ein Computertomografie-Sensor integriert ist.

Zum Messen der Geometrie von Werkstücken sind Koordinatenmessgeräte mit verschiedenen Sensoren bekannt. Als solche Sensoren werden optische und taktile Sensoren beschrieben (DE.Z.: Die Bibliothek der Technik, Bd. 248). Ebenfalls ist der Einsatz von Computer-Tomografen zur Bestimmung von Werkstückgeometrien insbesondere von Fehlstellen bekannt. So wird in der DE-A- 103 31 419 eine Kombination beider Geräte beschrieben. Hierbei ist ein Computer-Tomograf fest am Grundaufbau des Koordinatenmessgerätes befestigt. Dabei wird mittels klassischer Koordinatenmesstechnik-Sensorik die Position des Messobjektes bestimmt und hierauf folgend in den Mcssbercich des Computer-Tomografen positioniert.

Aus der DE-A-100 44 169 ist ein Verfahren zur Bestimmung der Dicke von Werkstücken bekannt. Dabei trifft die ein zu messendes Bauteil durchsetzende Röntgenstrahlung auf einen Detektor. Das Bauteil kann mittels eines Manipulators gedreht sowie angehoben und abgesenkt werden. Nach vollständiger Durchleuchtung des Bauteils liefert ein Rechner eines Computer-Tomographen einen Stapel von Grauwertschnittbildern, die zusammengefügt werden, um einen dreidimensionalen Voxel-Datensatz zu erhalten. Aus diesem wird sodann die Wandstärke des Bauteils berechnet.

Aus der DE-C-38 06 686 ist ein Koordinatenmessgerät mit einem Multisensortastsystem bekannt, das einen taktil arbeitenden Sensor, einen Lasersensor und einen Videosensor umfasst, wobei entsprechend den Messaufgaben ein Einsatz einer der Sensoren erfolgt. Einen dieser Sensoren durch einen Computer-Tomografen zu ersetzen, sieht die EP-A-1 389 263 vor.

Aus der US-A-2003/0043964 ist ein Inspektionssystem für Flugzeugrümpfe bekannt, das eine innerhalb des Rumpfes von einem Kran ausgehende Röntgenquelle und einen außerhalb des Rumpfes ebenfalls von einem Kran ausgehenden Sensor umfasst. Um die Position des Sensors zu bestimmen, wird ein Triangulationsverfahren benutzt.

Ein Messgerät nach der DE-A-100 01 239 sieht neben einem Positionsdetektor ein nicht optisches Messsystem wie ein AFM (Atomic Force Microscope) vor, die über ein Trag-element starr miteinander verbunden sind.

Ein Multisensormesskopf nach der DE-A-44 45 331 umfasst eine Vertikalachse, auf der mehrere Sensoren montiert sein können.

In einem Koordinatenmessgerät nach der EP-A-0 504 609 werden neben Messköpfen auch Gelenkfräsköpfe eingesetzt.

Eine Röntgenprüfanordnung nach der US-A-5,038,378 sieht die Möglichkeit vor, einen Röntgenstrahldetektor unabhängig voneinander entlang von drei Achsen zu verstellen.

Aus der WO-A-2005/119174 ist ein Koordinatenmessgerät bekannt, bei dem sowohl mit einer Röntgensensorik als auch mit einer zweiten Sensorik gemessen wird, die gleichwertig in dem Koordinatenmessgerät angeordnet sind. Dabei besteht die Möglichkeit, dass aufgrund der Messung mit anderen Sensoren, wie Tastern, Daten, die aus der Tomografie resultieren, korrigiert werden, um die Genauigkeit zu steigern. Auch sieht der entsprechende Stand der Technik vor, dass Werkstücke messbar sind, die in Bezug auf Röntgenstrahlung einen geringen Kontrast zeigen. Hierzu wird das entsprechende Objekt von einem Material umgeben, das eine höhere Absorption als das Objekt selbst aufweist.

Ein ungelöstes, beziehungsweise nur schlecht gelöstes Problem, stellt die Messung von Teilen aus verschiedenen Materialien dar. Diese sind mit herkömmlichen Methoden der Tomografie oft nur schlecht beziehungsweise gar nicht messbar. Zum Beispiel das Messen von Teilen bei denen Metall, zum Beispiel Stahl, in Kunststoff eingebettet ist, stößt auf Schwierigkeiten. Hier ist zwar mit Tomografie die Messung des eingeschlossenen Metallkems möglich. Bei der hierfür sehr stark eingestellten Strahlung ist jedoch eine gleichzeitige Messung des Kunststoffmantels wegen zu geringem Kontrast nur mit sehr geringer Genauigkeit oder auch gar nicht möglich.

Aufgabe der vorliegenden Erfindung ist es, ein Verfahren zum dimensionellen Messen mit Koordinatenmessgeräten, in denen ein Computertomografie-Sensor integriert ist, derart weiterzuentwickeln, dass gezielt gewünschte Bereiche des Messobjekts gemessen werden können.

Zur Lösung der Aufgabe ist vorgesehen, dass die für die Computertomografie-Messung auszuwählenden Messpunkte durch den Bediener durch Anwahl von CAD-Patches eines CAD-Modells des Messobjekts selektiert werden. Weiterbildungen ergeben sich aus den abhängigen Ansprüchen.

Insbesondere ist vorgesehen, dass das CAD-Modell des Messobjektes und die Messpunktewolke durch BestFit oder manuelle Anpassung zur Überlagerung gebracht werden.

Insbesondere werden all die Messpunkte zur weiteren Auswertung herangezogen, die innerhalb eines Suchbereiches um das angewählte CAD-Patch herum liegen.

Dabei können bei Anwahl eines einzelnen gemessenen Punktes automatisch weitere Punkte hinzuselektiert werden.

Vorzugsweise ist vorgesehen, dass vor der Anwahl eines Punktes ein Regelgeometrie-Element wie Zylinder/Ebene als Zielelement angewählt wird und dann durch die Software so viele Messpunkte selektiert werden, bis die Formabweichung eines Ausgleichselementes vom Typ des Zielelementes, welches aus den angewählten Punkten gerechnet wird, in seiner Formabweichung einen vorher festgelegten Grenzwert unterschreitet.

Es kann vor der Anwahl eines Punktes ein regelgeometrisches Zielelement Zylinder angewählt und dann durch die Software so viele Messpunkte selektiert werden, bis die Formabweichung eines Ausgleichselementes, welches aus den angewählten Punkten gerechnet wird, in seiner Formabweichung einen vorher festgelegten Grenzwert unterschreitet.

Auch besteht die Möglichkeit, dass vor der Anwahl eines Punktes ein regelgeometrisches Zielelement Ebene angewählt wird und dann durch die Software so viele Messpunkte selektiert werden, bis die Formabweichung eines Ausgleichselementes, welches aus den angewählten Punkten gerechnet wird, in seiner Formabweichung einen vorher festgelegten Grenzwert unterschreitet.

Alternativ oder ergänzend kann vor der Anwahl eines Punktes ein regelgeometrisches Zielelement Kugel angewählt und dann durch die Software so viele Messpunkte selektiert werden, bis die Formabweichung eines Ausgleichselementes, welches aus den angewählten Punkten gerechnet wird, in seiner Formabweichung einen vorher festgelegten Grenzwert unterschreitet.

Eine weitere Möglichkeit sieht vor, dass vor der Anwahl eines Punktes ein regelgeometrisches Zielelement Torus angewählt wird und dann durch die Software so viele Messpunkte selektiert werden, bis die Formabweichung eines Ausgleichselementes, welches aus den angewählten Punkten gerechnet wird, in seiner Formabweichung einen vorher festgelegten Grenzwert unterschreitet.

Es besteht auch die Möglichkeit, dass vor der Anwahl eines Punktes ein Zielelement in Form eines im CAD-Format beschriebenen Freiform-Patches angewählt wird und dann durch die Software so viele Messpunkte selektiert werden, bis die Formabweichung eines Ausgleichselementes, welches aus den angewählten Punkten gerechnet wird, in seiner Formabweichung einen vorher festgelegten Grenzwert unterschreitet.

Auch ist vorgesehen, dass die Auswertung von mit Computertomografie gemessenen Messpunkten durch Simulation einer taktilen oder optischen Messung an der Punktewolke sichergestellt wird.

Es besteht die Möglichkeit, dass die Auswertung der Messergebnisse durch Vergleich der Ist-Messwerte mit CAD-Soll-Elementen und farblicher Abweichungsdarstellung erfolgt.

Auch kann die Auswertung der Messergebnisse durch Bestimmung von Maßen wie Länge, Winkel, Durchmesser, Distanz und Vergleich mit den in einer Zeichnung festgelegten Sollwerten erfolgen.

Dabei besteht die Möglichkeit, dass Sollwerte, obere und untere Toleranz einem CAD-Format entnommen werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung eines Multisensor-Koordinatenmessgerätes,
- Fig. 2: eine Prinzipdarstellung eines zu messenden Werkstücks,
- Fig. 3: eine Prinzipdarstellung einer Messanordnung, bei der mit einem Röntgendetektor gemessen wird,
- Fig. 4: eine der Fig. 3 entsprechende Vorrichtung, bei der mit einem Laserliniensensor gemessen wird,
- Fig. 5: die Vorrichtung gemäß der Fig. 3 und 4, mit der die Sensoren eingemessen werden, und
- Fig. 6: ein CAD-Modell.

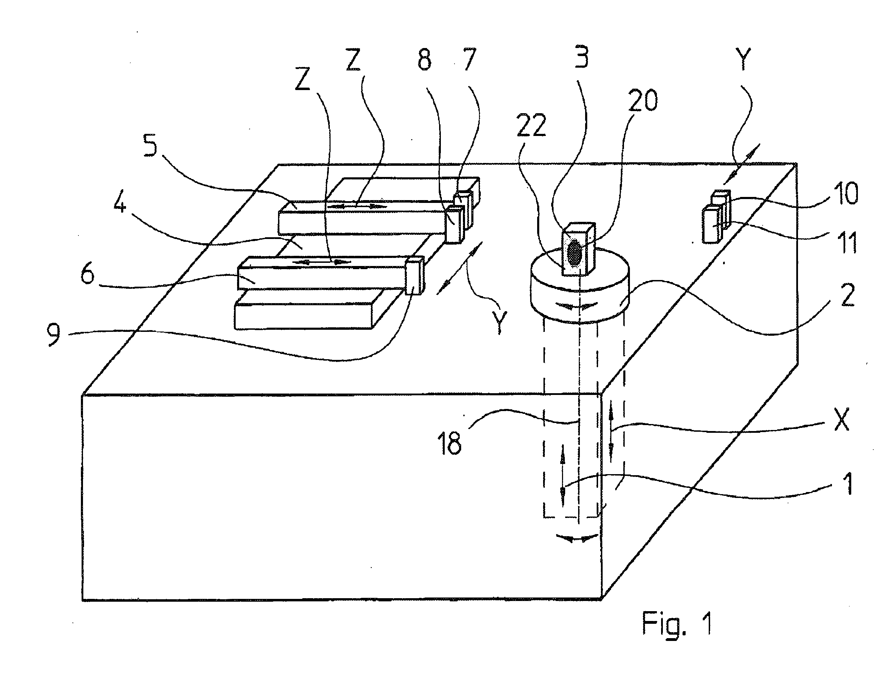

Der Fig. 1 ist eine Prinzipdarstellung eines Multisensor-Koordinatenmessgerätes zu entnehmen, das für den kombinierten Einsatz von Röntgensensorik, also Computertomografie, und optischer und taktiler Sensorik bestimmt ist. Als optische Sensorik ist dabei insbesondere ein Laserliniensensor in Betracht zu ziehen, ohne dass hierdurch die erfindungsgemäße Lehre eingeschränkt werden soll.

Auf einer parallel zur X-Achse des Koordinatenmessgeräts verlaufenden Achse 18 ist ein Drehtisch 2 angeordnet. Auf diesem befindet sich ein Messobjekt 3 und kann somit um die Drehachse 18 rotiert werden und in X-Richtung durch die Achse 18 verschoben werden (Doppelpfeil). Auf einem parallel zu Y-Achse verlaufenden Schieber 4 sind zwei parallel zur Z-Achse verlaufende Achsen 5, 6 angeordnet. Auf der mechanischen Achse 5 befindet sich ein Sensor 7 für Röntgenstrahlung und ein Laserliniensensor 8. Auf der mechanischen Achse 6 befindet sich zusätzlich ein taktiler Sensor 9. Gegenüber dem Röntgensensor 7 ist eine Röntgenquelle 10 angeordnet, die wahlweise in Y-Richtung bewegbar oder fest angebracht sein kann. Gegenüber der Bildverarbeitungssensorik 8 befindet sich eine Durchlichtquelle 11. Die mechanischen Achsen bzw. Schieber, die entlang der X-, Y- bzw. Z-Achse des Koordinatenmessgerätes verlaufen, sind so ausgelegt, dass die in bzw. auf dem Koordinatenmessgerät installierten Sensoren jeweils den gesamten Messbereich auf dem Drehtisch 2 überdecken können.

Durch die Integration der Computer-Tomografie (CT) in ein Multisensor-Koordinatenmessgerät werden völlig neue Möglichkeiten geschaffen. Eine schnelle, zerstörungsfreie Komplettrnessung mit der Tomografie wird mit hochgenauen Messungen von Funktionsmaßen mit taktiler oder optischer Sensorik vereint. Dabei ist erfindungsgemäß vorgesehen, dass die Röntgensensorik (Sensor, Strahlenquelle) entsprechend der zweiten Sensorik (z. B. Bildverarbeitungssensor, Durch- oder Auflichtstrahlenquelle oder taktiler Sensor gegebenenfalls mit zugeordnetem Bildverarbeitungssensor) in dem Koordinatenmessgerät positionierbar ist, dass also gleichwertig zur zweiten Sensorik die Röntgensensorik angeordnet ist. Dabei kann die Röntgensensorik mit zumindest der taktilen Sensorik und/oder der optischen Sensorik auf einer gemeinsamen mechanischen Achse angeordnet bzw. auf einer separaten mechanischen Achse angeordnet sein, die in analoger Weise wie die mechanischen Achsen für die taktile und/oder optische Sensorik arbeitet.

Aus der Prinzipdarstellung der Fig. 1 ergibt sich, dass das Messobjekt 3 einen Kern 20 aufweist, der von einer Hülle 22 umgeben ist. Dabei besteht der Kern 20 aus einem schweren Material wie Metall und die Hülle 22 aus einem leichteren Material wie Kunststoff. Ungeachtet des Einsatzes der Tomografie besteht erfindungsgemäß die Möglichkeit, die Hülle bzw. den Mantel 22 gleichfalls mit hoher Genauigkeit zu messen. Dies erfolgt dadurch, dass neben der Messung mit der Tomografie, also mittels des Computertomografie-Sensors 7, 10 eine zweite Punktwolke mit dem Laserliniensensor 8 gemessen werden kann. Alternativ zum Laserliniensensor 8 kann auch der taktile Sensor 9 oder ein anderer für Koordinatenmessgeräte geeigneter Sensor eingesetzt werden, der die Möglichkeit schafft, die Oberfläche des Messobjektes 3, also der Umhüllenden 22 anzutasten.

Durch die Überlagerung der Computertomografie-Messdaten des Kerns 20 und der Messdaten der Oberfläche, also der Umhüllenden 22, die mit dem zweiten Sensor wie dem Laserliniensensor 8 bestimmt werden, wird ein Gesamtmessergebnis des Messobjekts 3 bestehend aus Materialkombinationen sehr unterschiedlicher Dichten gewonnen. Folglich kann der Vorteil für die Messung von innenliegenden Geometrien mittels Computertomografie mit dem Vorteil der genauen Messung von Außengeometrien mit klassischem Sensoren der Koordinatenmesstechnik kombiniert werden.

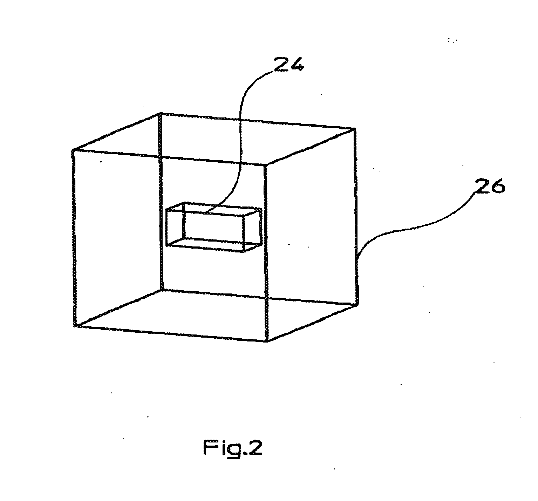

Ein entsprechendes nach dem erfindungsgemäßen Verfahren bzw. erfindungsgemäß ausgebildeten Multisensor-Koordinatenmessgerät zu messendes Werkstück ist beispielhaft in Fig. 2 dargestellt. Das Werkstück weist eine Innenstruktur 24 und eine Umhüllende oder Außenstruktur 26 auf, wobei die Innenstruktur 24 z. B. aus Metall und die Außenstruktur 26 aus Kunststoff bestehen kann.

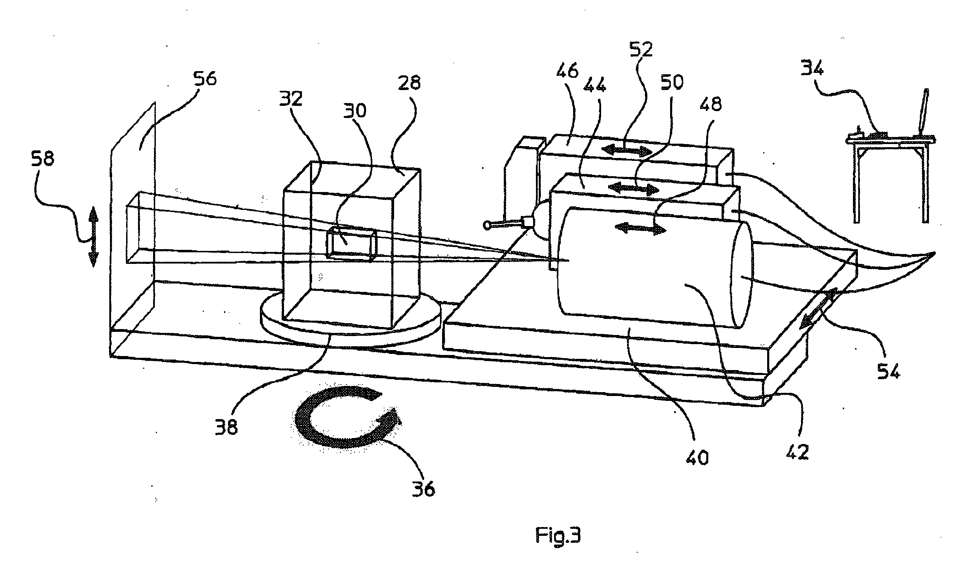

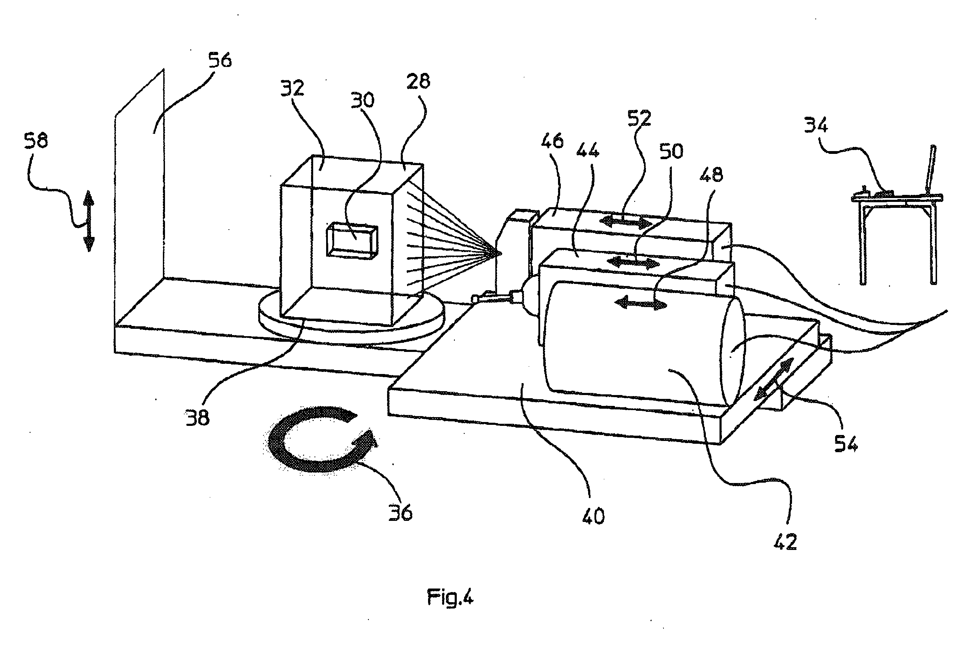

Die Fig. 3 bis 5 geben noch einmal in prinzipieller Darstellung eine Vorrichtung zum vollständigen dimensionellen Messen eines entsprechenden Werkstücks wieder, das aus einem oder mehreren Materialien besteht und mit verschiedenen Sensoren gemessen wird. Das entsprechende Werkstück ist in den Fig. 3 und 4 mit dem Bezugszeichen 28 gekennzeichnet und weist einen Kern 30 und eine Umhüllende 32 auf. Der Kern 30 kann z. B. aus Metall und die Umhüllende 32 aus einem leichteren Werkstoff wie Kunststoff bestehen.

Die Vorrichtung umfasst eine Auswerteeinheit 34 mit Steuerungs-Hard- und -Software sowie Speichereinheit zum Speichern von Messpunkten. Ferner ist eine Ein- und Ausgabeeinheit für einen Bediener vorhanden.

Die Vorrichtung umfasst einen um eine Drehachse (Pfeil 36) drehbaren Tisch 38 für das Werkstück 28. Auf einem Träger 40 sind ein Röntgensensor 42 sowie beispielhaft ein taktiler Sensor 44 sowie ein Laserliniensensor 46 angeordnet, die entlang durch Doppelpfeile 48, 50, 52 gekennzeichnete Verfahrachsen auf dem Träger 40 verschiebbar sind. Der Träger 40 selbst ist entlang einer senkrecht zu den Verfahrachsen 48, 50, 52 verlaufenden Achse 54 verschiebbar.

Auf der in Bezug auf den Röntgensensor 42 gegenüberliegenden Seite des Werkstücks 28 ist ein Röntgendetektor 56 angeordnet, der entlang einer Achse 58 verstellbar ist, die senkrecht zu den Verfahrachsen 48, 50, 52, 54 verläuft. Eine weitere Ausführungsform sieht vor, dass der Detektor 56 auch in Querrichtung, also parallel zur Richtung 54 verstellt wird.

Im Ausführungsbeispiel der Fig. 4 wird der Kern bzw. die Innenstruktur 30 des Werkstücks 28 mit dem Röntgensensor 42, 56 erfasst.

Demgegenüber wird in Fig. 3 die Außenstruktur, also die Hülle 32 des Werkstücks 28 gemessen, und zwar mittels des Laserliniensensors 46.

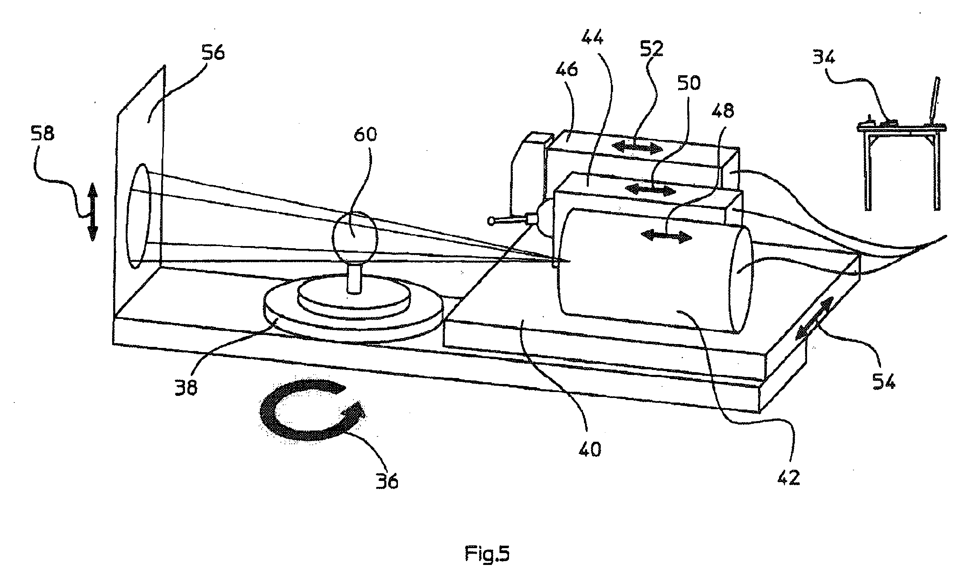

Um die verschiedenen Sensoren 42, 44, 46 aufeinander einzumessen, wird gemäß Fig. 5 ein Referenzkörper 60 auf dem Drehtisch 38 angeordnet und gemessen. Im Ausführungsbeispiel handelt es sich bei dem Referenzkörper um eine Kugel bekannter Dimensionierung. Die Kugel 60 wird sodann mit den verschiedenen Sensoren 42, 44, 46 gemessen.

Eine Weiterführung der Erfindung ermöglicht, viele Punkte, z. B. mit der Computertomografie oder der Laserliniensensorik zu messen. Dies wird erfindungsgemäß durch eine geeignete Punktselektion bei Verbindung des Messsystems mit CAD-Daten erreicht. So kann eine Software implementiert werden, so dass der Bediener durch Anwahl eines Patches (Fläche) in einem CAD-Modell einen Bereich selektiert. Durch entsprechende Software-Algorithmen werden automatisch alle Punkte des Messobjektes, die durch Tomografie bestimmt werden, selektiert, die diesem Patch geometrisch zugeordnet sind. Hieraus wird das Ist-Messergebnis des zu messenden Objektes ermittelt. Als Patch kommt z. B. eine Ebene oder ein Zylindermantel in Frage.

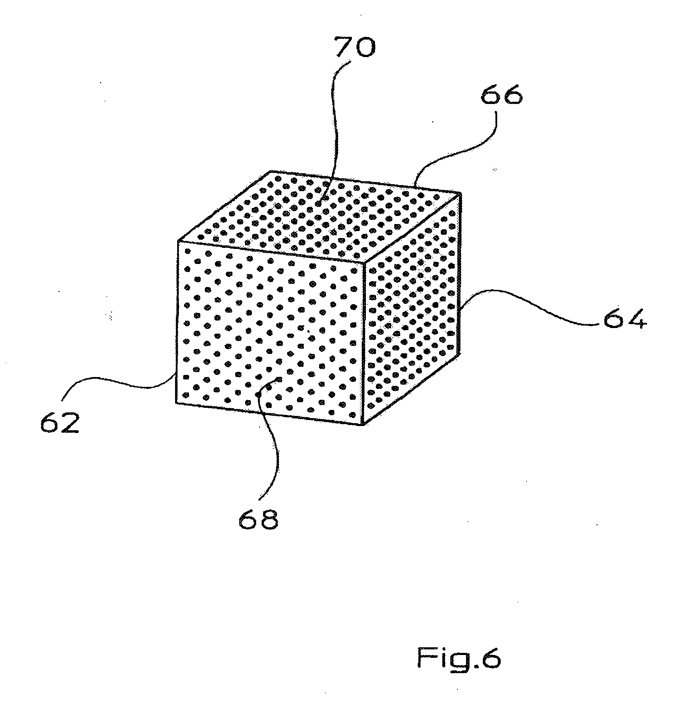

Rein prinzipiell ist in der Fig. 6 ein CAD-Modell mit CAD-Patches (Flächen) 62, 64, 66 (beispielhaft die sichtbaren Flächen des dargestellten Würfels) sowie eine Messpunktwolke (schwarze Punkte) 68 bestehend aus einzelnen 3D-Messpunkten dargestellt. Im Ausführungsbeispiel wird das Patch 66 (Würfeldeckfläche) selektiert und es werden automatisch die in der Deckfläche vorhandenen Punkte 70 aus der Gesamtpunktewolke 68 selektiert und zur weiteren Verarbeitung wie z. B. Berechnung einer Ausgleichsebene herangezogen. In analoger Weise kann mit den anderen Würfelflächen verfahren werden. Durch Inbeziehungsetzen der Ausgleichsebenen zueinander können z. B. Winkel oder Abstände berechnet werden.

## Patentansprüche

1. Verfahren zum dimensionellen Messen eines Messobjekts mit einem Koordinatenmessgerät, in dem ein Computertomografie-Sensor integriert ist,
**dadurch gekennzeichnet,**
**dass** die für die Computertomografie-Messung auszuwählenden Messpunkte durch den Bediener durch Anwahl von CAD-Patches eines CAD-Modells des Messobjekts selektiert werden.

2. Verfahren nach Anspruch 1,
**dadurch gekennzeichnet,**
**dass** das CAD-Modell des Messobjektes und die Messpunktewolke durch BestFit oder manuelle Anpassung zur Überlagerung gebracht werden.

3. Verfahren nach einem der vorhergehenden Ansprüche,
**dadurch gekennzeichnet,**
**dass** all die Messpunkte zur weiteren Auswertung herangezogen werden, die innerhalb eines Suchbereiches um das angewählte CAD-Patch herum liegen.

4. Verfahren nach einem der vorhergehenden Ansprüche,
**dadurch gekennzeichnet,**
**dass** bei Anwahl eines einzelnen gemessenen Punktes automatisch weitere Punkte hinzuselektiert werden.

5. Verfahren nach einem der vorhergehenden Ansprüche,
**dadurch gekennzeichnet,**
**dass** vor der Anwahl eines Punktes ein Regelgeometrie-Element wie Zylinder/Ebene als Zielelement angewählt wird und dann durch die Software so viele Messpunkte selektiert werden, bis die Formabweichung eines Ausgleichselementes vom Typ des Zielelementes, welches aus den angewählten Punkten gerechnet wird, in seiner Formabweichung einen vorher festgelegten Grenzwert unterschreitet.

6. Verfahren nach einem der vorhergehenden Ansprüche,
**dadurch gekennzeichnet,**
**dass** vor der Anwahl eines Punktes ein regelgeometrisches Zielelement Zylinder oder Ebene oder Kugel oder Torus oder ein Zielelement in Form eines im CAD-Format beschriebenen Freiform-Patches angewählt wird und dann durch die Software so viele Messpunkte selektiert werden, bis die Formabweichung eines Ausgleichselementes, welches aus den angewählten Punkten gerechnet wird, in seiner Formabweichung einen vorher festgelegten Grenzwert unterschreitet.

7. Verfahren nach einem der vorhergehenden Ansprüche,
**dadurch gekennzeichnet,**
**dass** die Auswertung von mit Computertomografie gemessenen Messpunkten durch Simulation einer taktilen oder optischen Messung an der Punktewolke sichergestellt wird.

8. Verfahren nach einem der vorhergehenden Ansprüche,
**dadurch gekennzeichnet,**
**dass** die Auswertung der Messergebnisse durch Vergleich der Ist-Messwerte mit CAD-Soll-Elementen und farblicher Abweichungsdarstellung erfolgt.

9. Verfahren nach einem der vorhergehenden Ansprüche,
**dadurch gekennzeichnet,**
**dass** die Auswertung der Messergebnisse durch Bestimmung von Maßen wie Länge, Winkel, Durchmesser, Distanz und Vergleich mit der in einer Zeichnung festgelegten Sollwerten erfolgt.

10. Verfahren nach einem der vorhergehenden Ansprüche,
**dadurch gekennzeichnet,**
**dass** Sollwerte, obere und untere Toleranz einem CAD-Format entnommen werden.

## Claims

1. A method for dimensional measurement of a measuring object with a coordinate measuring device having an integrated computer tomography sensor,
**characterized in that**
measuring points to be chosen for the computer tomographic measurement are selected by the operator by selection of CAD-patches of a CAD-model of the measuring object.

2. The method according to claim 1,
**characterized in that**
the CAD-model of the measuring object and the measuring point cloud are made to overlap by BestFit or manual adaptation

3. The method according to one of the previous claims,
**characterized in that**
all the measuring points that are located within a search area around the selected CAD-patch are used for the further evaluation,

4. The method according to one of the previous claims,
**characterized in that**
when selecting an individual measured point, additional points are automatically selected and added.

5. The method according to one of the precious claims,
**characterized in that**
before the selection of a point, a regular geometric element, such as a cylinder/plane is selected as target element, and then as many measuring points are selected by the software as are needed, until the shape deviation of a compensation element of the type of the target element, which is calculated from the selected points, in its shape deviation falls below a previously established limit value.

6. The method according to one of the previous claims,
**characterized in that**
before the selection of a point, a regular geometric target element cylinder, or plane, or sphere, or torus, or a target element in the form of a free form patch described in the CAD format is selected, and then as many measuring points are selected by the software as are needed, until the shape deviation of a compensation element which is calculated from the selected points, in its shape deviation falls below a previously established limit value.

7. The method according to claim one of the previous claims,
**characterized in that**
the evaluation of measuring points measured with computer tomography is ensured by the simulation of a tactile or optical measurement on the point cloud.

8. The method according to one of the previous claims,
**characterized in that**
the evaluation of the measurement results is carried out by comparing the actual measurement values with the CAD target elements, and a colour deviation representation.

9. The method according to one of the previous claims,
**characterized in that**
the evaluation of the measurement results is carried out by determining measures, such as length, angle, diameter, distance, and comparison with the target values established in a drawing.

10. The method according to one of the previous claims,
**characterized in that**
target values, the upper and lower tolerances are taken from a CAD format.

## Revendications

1. Procédé destiné au mesurage des dimensions d'un objet de mesure avec un appareil de mesure de coordonnées dans lequel est intégré un capteur tomodensitométrique,
**caractérisé en ce**
**que** les points de mesure devant être choisis par l'opérateur pour la mesure tomodensitométrique sont sélectionnés par sélection de patchs (surfaces) CAO d'un modèle CAO de l'objet de mesure.

2. Procédé selon la revendication 1,
**caractérisé en ce**
**que** le modèle CAO de l'objet de mesure et le nuage de points de mesure sont amenés en superposition par BestFit ou ajustement manuel.

3. Procédé selon l'une des revendications précédentes,
**caractérisé en ce**
**que** pour une analyse ultérieure sont utilisés tous les points de mesure qui se trouvent à l'intérieur d'une zone de recherche autour du patch CAO sélectionné.

4. Procédé selon l'une des revendications précédentes,
**caractérisé en ce**
**que** lors du choix d'un seul point mesuré, d'autres points sont automatiquement sélectionnés en supplément.

5. Procédé selon l'une des revendications précédentes,
**caractérisé en ce**
**qu'**avant le choix d'un point est sélectionné en tant qu'élément cible un élément géométrique régulier tel qu'un cylindre / un plan, puis qu'autant de points de mesure sont sélectionnés par le logiciel jusqu'à ce que l'écart de forme d'un élément compensateur du type de l'élément cible et qui est calculé à partir des points choisis, reste en dessous d'une valeur limite définie auparavant.

6. Procédé selon l'une des revendications précédentes,
**caractérisé en ce**
**qu'**avant le choix d'un point est sélectionné un élément cible à géométrie régulière tel qu'un cylindre ou un plan ou une sphère ou un tore ou un élément cible sous forme d'un patch de forme libre décrit en format CAO, puis qu'autant de points de mesure sont sélectionnés par le logiciel jusqu'à ce que l'écart de forme d'un élément compensateur qui est calculé à partir des points choisis reste en dessous d'un valeur limite définie auparavant.

7. Procédé selon l'une des revendications précédentes,
**caractérisé en ce**
**que** l'analyse des points de mesure mesurés par tomodensitométrie est assurée par simulation d'une mesure tactile ou optique sur le nuage de points.

8. Procédé selon l'une des revendications précédentes,
**caractérisé en ce**
**que** l'analyse des résultats des mesures est effectuée par comparaison des valeurs réelles mesurées avec des éléments CAO théoriques et une représentation en couleur des écarts.

9. Procédé selon l'une des revendications précédentes,
**caractérisé en ce**
**que** l'analyse des résultats des mesures est effectuée par détermination de grandeurs telles que longueur, angle, diamètre, distance, et comparaison avec les valeurs théoriques définies dans un dessin.

10. Procédé selon l'une des revendications précédentes,
**caractérisé en ce**
**que** des valeurs théoriques, des tolérances supérieures et inférieures sont extraites d'un format CAO.
